# EUROPEAN PATENT SPECIFICATION

(11) **EP 2 672 840 B1**
(45) Date of publication and mention of the grant of the patent: **26.12.2018**
(21) Application number: 12744188.9
(22) Date of filing: 10.02.2012
(51) Int. Cl.: A23L 27/30, A23L 2/60

(54) **STEVIA COMPOSITION**
STEVIA-ZUSAMMENSETZUNG
COMPOSITION À BASE DE STÉVIA

(30) Priority: 13.05.2011 US 201113129158; 11.05.2011 WO PCT/US2011/036063; 10.02.2011 US 201161441443 P; 20.06.2011 US 201161499171 P
(43) Date of publication of application: 18.12.2013
(60) Divisional application: 17196473.7
(73) Proprietor: Purecircle USA, Oak Brook, IL 60523-1492 (US)
(72) Inventor: PURKAYASTHA, Siddhartha, Fulham London SW6 7HP (GB); CANAR, Michele, M., Park Ridge, IL 60068 (US); MARKOSYAN, Avetik, Yerevan 375064 (AM)
(74) Representative: Spencer, Michael David
(86) International application number: PCT/US2012/024722
(87) International publication number: WO 2012/109585

(56) References cited:
- WO-A1-2010/057024
- WO-A1-2011/094423
- WO-A1-2012/102769
- US-A- 4 219 571
- US-A- 4 612 942
- US-A1- 2008 292 775
- US-A1- 2009 017 185
- US-A1- 2009 053 378
- US-A1- 2010 099 857
- US-A1- 2010 316 782
- N N: "Rebaudioside A and Stevia Extract", INTERNET CITATION, 1997, XP002425497, Retrieved from the Internet: URL:http://emperorsherbologist.com/rebaudi oside_a.php [retrieved on 2007-03-16]

## Description

### BACKGROUND OF THE INVENTION

### Field of the Invention

The invention relates to a composition for producing a highly purified food ingredient from the extract of the *Stevia Rebaudiana* Bertoni plant and its use in various food products and beverages.

### Description of the Related Art

Nowadays sugar alternatives are receiving increasing attention due to awareness of many diseases in conjunction with consumption of high-sugar foods and beverages. However many artificial sweeteners such as dulcin, sodium cyclamate and saccharin were banned or restricted in some countries due to concerns on their safety. Therefore non-caloric sweeteners of natural origin are becoming increasingly popular. The sweet herb *Stevia Rebaudiana* Bertoni produces a number of diterpene glycosides which feature high intensity sweetness and sensory properties superior to those of many other high potency sweeteners.

The above-mentioned sweet glycosides, have a common aglycon, steviol, and differ by the number and type of carbohydrate residues at the C13 and C19 positions. The leaves of Stevia are able to accumulate up to 10-20% (on dry weight basis) steviol glycosides. The major glycosides found in Stevia leaves are Rebaudioside *A* (2-10%), stevioside (2-10%), and Rebaudioside *C* (1-2%). Other glycosides such as Rebaudioside *B, D, E,* and *F*, steviolbioside and rubusoside are found at much lower levels (approx. 0-0.2%).

Two major glycosides - stevioside and Rebaudioside *A* (Reb *A*), were extensively studied and characterized in terms of their suitability as commercial high intensity sweeteners. Stability studies in carbonated beverages confirmed their heat and pH stability (Chang S.S., Cook, J.M. (1983) Stability studies of stevioside and Rebaudioside A in carbonated beverages. J. Agric. Food Chem. 31: 409-412.)

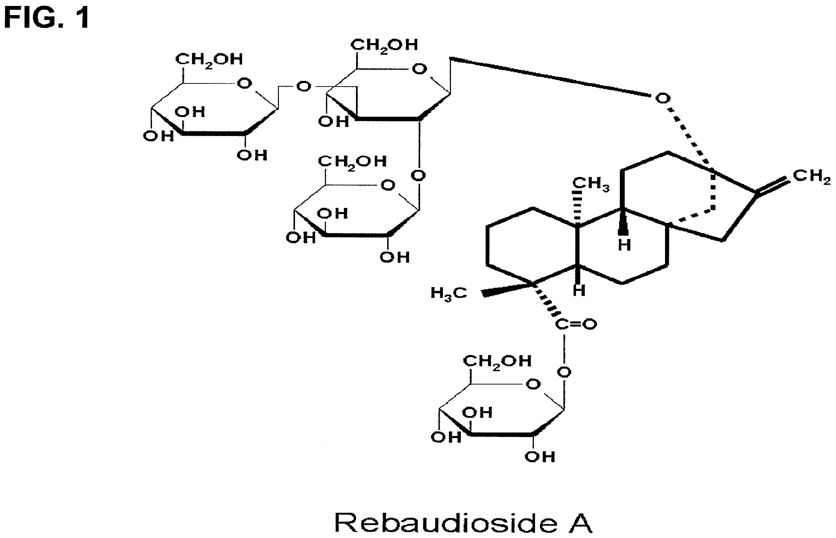

Steviol glycosides differ from each other not only by molecular structure, but also by their taste properties. Usually stevioside is found to be 110-270 times sweeter than sucrose, Rebaudioside *A* between 150 and 320 times, and Rebaudioside *C* between 40-60 times sweeter than sucrose. Dulcoside *A* is 30 times sweeter than sucrose. Rebaudioside *A* has the least astringent, the least bitter, and the least persistent aftertaste thus possessing the most favorable sensory attributes in major steviol glycosides (Tanaka O. (1987) Improvement of taste of natural sweeteners. Pure Appl. Chem. 69:675-683; Phillips K.C. (1989) Stevia: steps in developing a new sweetener. In: Grenby T.H. ed. Developments in sweeteners, vol. 3. Elsevier Applied Science, London. 1-43). The chemical structure of Rebaudioside *A* is shown in Fig. 1.

Methods for the extraction and purification of sweet glycosides from the *Stevia Rebaudiana* plant using water or organic solvents are described in, for example, U.S. Patent Numbers 4,361,697; 4,082,858; 4,892,938; 5,972,120; 5,962,678; 7,838,044 and 7,862,845.

However, even in a highly purified state, steviol glycosides still possess undesirable taste attributes such as bitterness, sweet aftertaste, licorice flavor, etc. One of the main obstacles for the successful commercialization of stevia sweeteners are these undesirable taste attributes. It was shown that these flavor notes become more prominent as the concentration of steviol glycosides increases (Prakash I., DuBois G.E., Clos J.F., Wilkens K.L., Fosdick L.E. (2008) Development of Rebiana, a natural, non-caloric sweetener. Food Chem. Toxicol., 46, S75-S82.).

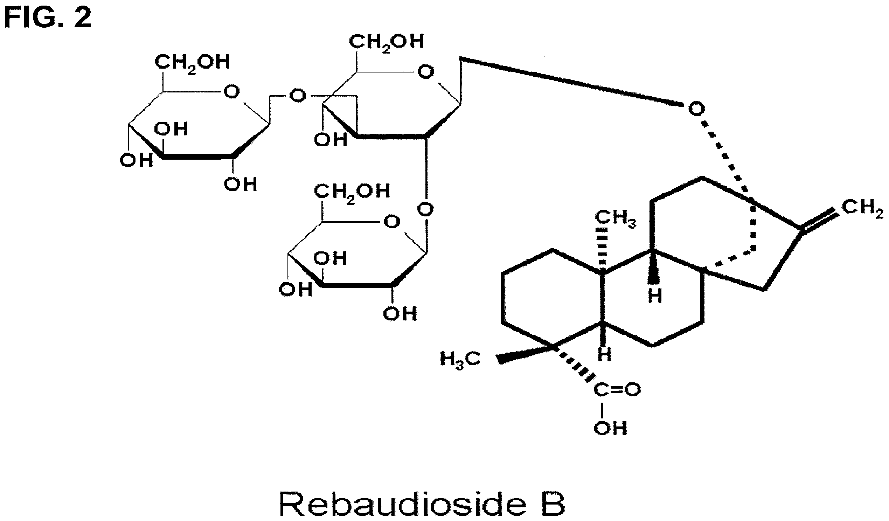

Rebaudioside *B* (CAS No: 58543-17-2), or Reb *B,* also known as stevioside *A₄* (Kennelly E.J. (2002) Constituents of Stevia Rebaudiana In Stevia: The genus Stevia, Kinghorn A.D. (Ed), Taylor & Francis, London, p.71), is one of the sweet glycosides found in *Stevia Rebaudiana.* Sensory evaluations show that Reb *B* was approximately 300-350 times sweeter than sucrose, while for Reb *A* this value was approximately 350-450 (Crammer, B. and Ikan, R. (1986) Sweet glycosides from the Stevia plant. Chemistry in Britain 22, 915-916, and 918). The chemical structure of Rebaudioside *B* is shown in Fig. 2.

It was believed that Reb *B* forms from partial hydrolysis of Rebaudioside *A* during the extraction process (Kobayashi, M., Horikawa, S., Degrandi, I.H., Ueno, J. and Mitsuhashi, H. (1977) Dulcosides A and B, new diterpene glycosides from Stevia Rebaudiana. Phytochemistry 16, 1405-1408). However further research shows that Reb *B* occurs naturally in the leaves of *Stevia Rebaudiana* and currently it is one of nine steviol glycosides recognized by FAO/JECFA (United Nations' Food and Agriculture Organization/Joint Expert Committee on Food Additives) in calculating total steviol glycosides' content in commercial steviol glycosides preparations (FAO JECFA (2010) Steviol Glycosides, Compendium of Food Additive Specifications, FAO JECFA Monographs 10, 17-21).

It is also noted that no significant work has been conducted to determine the potential of Reb B as a sweetener or food ingredient. Moreover Reb B is often viewed as process artifact and unnecessary impurity in commercial steviol glycosides preparations. No significant evaluation of Reb B influence on overall taste profile of steviol glycosides preparations has been conducted.

On the other hand, the water solubility of Reb B is reported to be about 0.1% (Kinghorn A.D. (2002) Constituents of Stevia Rebaudiana In Stevia: The genus Stevia, Kinghorn A.D. (Ed), Taylor & Francis, London, p.8). In many food processes where highly concentrated ingredients are used, a highly soluble form of Reb B will be necessary.

Previous sweetners involving steviol glycosides preparations are discussed in WO 2011/094423 A1, US 2009/05337 A1, US 2008/292775 A1 and WO 2012/102769 A1.

Considering the facts mentioned above, it is necessary to evaluate Reb B as a sweetener and food ingredient and develop a simple and efficient process for food grade Reb B preparations suitable for food applications.

In this invention, a process is developed to make Reb *B* and Reb *A* mixture or a combination of different glycosides. The process involved precise control of pH, temperature and time to achieve blends of different ratios of Reb A and Reb B and to make the mixer more soluble than a mechanical blend of Reb *A* and Reb *B.*

Within the description of this invention we will show that, when applied in specific manner, certain blend of Reb *B* with other steviol glycosides, especially Reb A, may impact the taste profile and offer significant advantages for stevia sweeteners' use in various applications.

### SUMMARY OF THE INVENTION

The present invention is aimed to overcome the disadvantages of existing Stevia sweeteners. Accordingly the present invention is directed to a sweetner composition as described in Claim 1. Blends of steviol glycosides and Reb *B* can be used for producing a high purity food ingredient from the extract of the *Stevia Rebaudiana* Bertoni plant and used in various food products and beverages as a sweetness and flavor modifier.

Rebaudioside *A* commercialized by PureCircle Sdn. Bhd. (Malaysia), containing, Rebaudioside *A* (about 95-100%), stevioside (about 0-1%), Rebaudioside *C* (about 0-1%), Rebaudioside *F* (about 0-1%), Rebaudioside *B* (about 0.1-0.8%)), Rebaudioside *D* (about 0-1%), and other glycosides amounting to total steviol glycosides' content of at least 95%, was used as a starting material. Alternatively stevia extracts with different ratio of steviol glycosides may be used as starting materials.

The starting material was subjected to partial conversion into Reb B under controlled pH and temperature conditions in aqueous media free of any co-solvents. The obtained glycoside mixtures were used "as-is" as well as Reb *B* was recovered and used as a pure ingredient.

The compositions can be used as sweetness enhancer, flavor enhancer and sweetener in various food and beverage products. Non-limiting examples of beverage products include carbonated and still beverages, flavored water, juice-based beverages, energy drinks and powder soft drinks. Non-limiting examples of food include dairy products (yogurt, yogurt drinks, flavored milk, frozen dairy desserts including ice cream), baked goods and baking mixes (bread, biscuits, cookies, muffins, rolls, and baking mixes), sauces and gravies, jams and jellies, gelatins, puddings and fillings, soy sauce and other soy based products, breakfast cereals, condiments and relishes, confections and frostings, processed fruits and vegetables, sugar substitutes and confectionery products including chewing gums.

### BRIEF DESCRIPTION OF THE DRAWINGS

The accompanying drawings are included to provide a further understanding of the invention. The drawings illustrate embodiments of the invention and together with the description serve to explain the principles of the embodiments of the invention.
FIG. 1 shows the chemical structure of Rebaudioside *A*.
FIG. 2 shows the chemical structure of Rebaudioside *B*

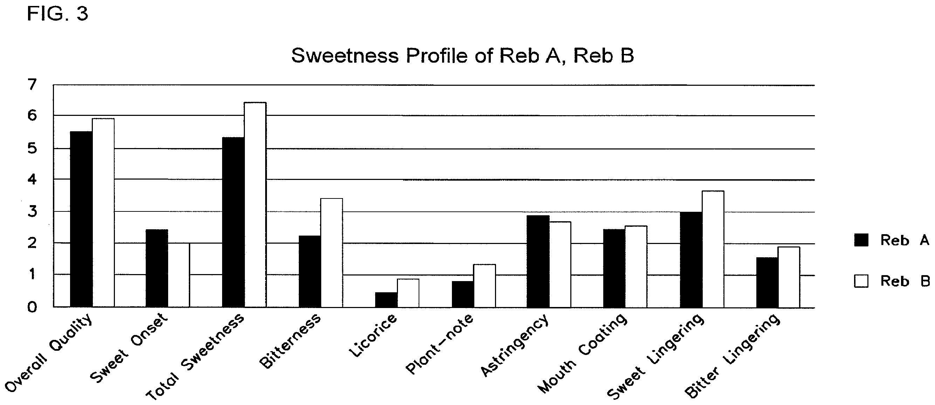

FIG. 3 shows the sweetness profile of Reb A and Reb B

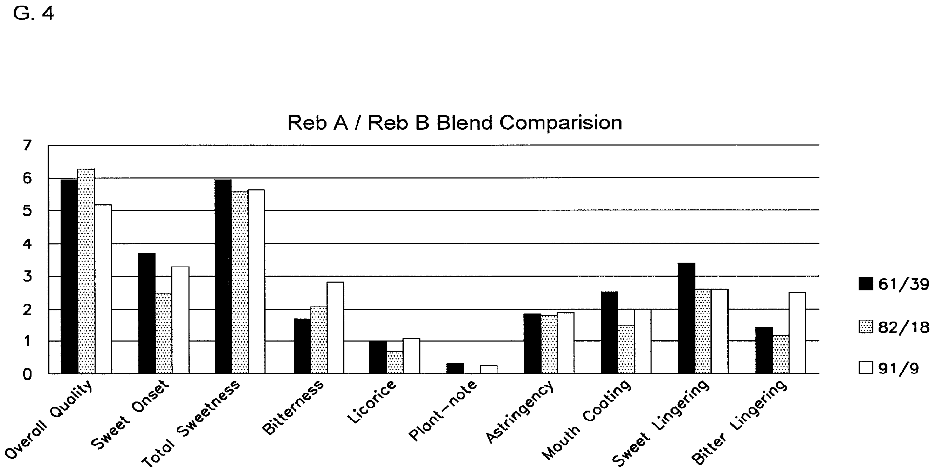

FIG. 4 shows the sweetness profile of different ratios of Reb A to Reb B (RebA/RebB).

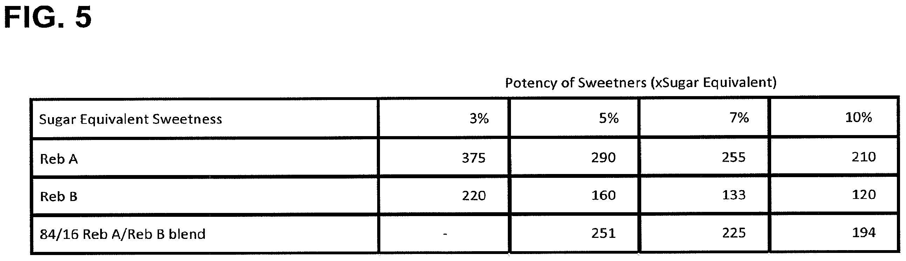

FIG. 5 shows the sweetness potency of Reb A, Reb B and an 84/16 RebA/RebB blend.
Fig. 6 shows the synergy between a natural flavor modifier (NSF02, available from PureCircle) with Reb A or PureCircle Alpha, a combination of Reb A and Reb B with minute amount of steviol glycosides .

### DETAILED DESCRIPTION OF THE INVENTION

Advantages of the present invention will become more apparent from the detailed description given hereinafter.

The compositions can be used as sweetness enhancer, flavor enhancer and sweetener in various food and beverage products. Non-limiting examples of food and beverage products include carbonated soft drinks, ready to drink beverages, energy drinks, isotonic drinks, low-calorie drinks, zero-calorie drinks, sports drinks, teas, fruit and vegetable juices, juice drinks, dairy drinks, yoghurt drinks, alcohol beverages, powdered beverages, bakery products, cookies, biscuits, baking mixes, cereals, confectioneries, candies, toffees, chewing gum, dairy products, flavored milk, yoghurts, flavored yoghurts, cultured milk, soy sauce and other soy base products, salad dressings, mayonnaise, vinegar, frozen-desserts, meat products, fish-meat products, bottled and canned foods, tabletop sweeteners, fruits and vegetables.

Additionally the compositions can be used in drug or pharmaceutical preparations and cosmetics, including but not limited to toothpaste, mouthwash, cough syrup, chewable tablets, lozenges, vitamin preparations, and the like.

The compositions can be used "as-is" or in combination with other sweeteners, flavors and food ingredients.

Examples of sweeteners include steviol glycosides, stevioside, Rebaudioside *A,* Rebaudioside *B,* Rebaudioside *C*, Rebaudioside *D,* Rebaudioside *E,* Rebaudioside *F*, dulcoside *A*, steviolbioside, rubusoside, as well as other steviol glycosides found in *Stevia Rebaudiana* Bertoni plant and mixtures thereof, stevia extract, Luo Han Guo extract, mogrosides, high-fructose corn syrup, corn syrup, invert sugar, fructooligosaccharides, inulin, inulooligosaccharides, coupling sugar, maltooligosaccharides, maltodextins, corn syrup solids, glucose, maltose, sucrose, lactose, aspartame, saccharin, sucralose, sugar alcohols.

Examples of flavors include lemon, orange, fruit, banana, grape, pear, pineapple, bitter almond, cola, cinnamon, sugar, cotton candy, vanilla flavors.

Examples of other food ingredients include flavors, acidulants, organic and amino acids, coloring agents, bulking agents, modified starches, gums, texturizers, preservatives, antioxidants, emulsifiers, stabilizers, thickeners, gelling agents. The following examples illustrate various embodiments of the invention. It will be understood that the invention is not limited to the materials, proportions, conditions and procedures set forth in the examples, which are only illustrative.

### EXAMPLE 1

Effect of stevia composition on solubility in water Solubility of sweetener is important for achieving the operational ease and desired sensory profile in beverage and food applications. Solubility tests were conducted using Reb A, Reb B, dry blend of Reb A & Reb B powders of different ratios, mixture of Reb A and Reb B made during the process and dried. Reb A and Reb showed solubility around 1% and 0.1% at room temperature and increased solubility on heating to a higher temperature. Table 1 shows the solubility of different ingredients and their blends.

**Table 1**

| Solubility in water for concentration of different blends | Reb A (as is) | Reb B (as is) | Dry blend of Reb B as a % of total glycosides (as is) | | | Blend made during the process, ratio of Reb B to total glycosides (as is) | | |
|---|---|---|---|---|---|---|---|---|
| | 100% | 100% | 10% | 16% | 26% | 10% | 16% | 26% |
| 0.5% | Yes | No* | No* | No* | No* | Yes | Yes | Yes |
| | | | | | | | | |
| 1% | Yes | No* | No* | No* | No* | Yes | Yes | Yes |
| 2% | No | No* | No* | No* | No* | Yes** | Yes** | Yes** |
| 5% | No | No* | No* | No* | No* | Yes** | Yes** | Yes** |

### Example 2

### Lemon-Lime Carbonated Soft Drink

The control carbonated soft drink sample was made with high fructose corn syrup (HFCS) 42 and other test samples were made with a combination of HFCS and Alpha or Reb A to attain 30% less calorie. The samples were evaluated by a trained internal panel and screened for overall sweetness, sweet onset, mouthfeel, flavor intensity, bitterness, sweet lingering and bitter lingering. Product with alpha feels smoother in mouth and is identified as closer to control than Reb A formula. It has less of a sharp sweetness peak than Reb A and reduced terpene notes compared to Reb A. The overall flavor is less altered compared to Reb A.

**Table 2**

| Ingredient | Control | Alpha | Reb A |
|---|---|---|---|
| Water | to QS | to Qs | to QS |
| HFCS 42 | 14.8333 | 10.3833 | 10.3833 |
| Reb A 97 | | | 0.0049 |
| Alpha | | 0.005767 | |
| xanthan gum | | 0.0050 | 0.0050 |
| Sodium Benzoate | 0.0263 | 0.0263 | 0.0263 |
| Potassium Citrate | 0.0263 | 0.0263 | 0.0263 |
| Citric Acid | 0.1500 | 0.1433 | 0.1433 |
| Malic Acid | | 0.0050 | 0.0050 |
| Flavor | 0-1110 | 0.1110 | 0.1110 |

### EXAMPLE 3

### Synergy with natural flavor

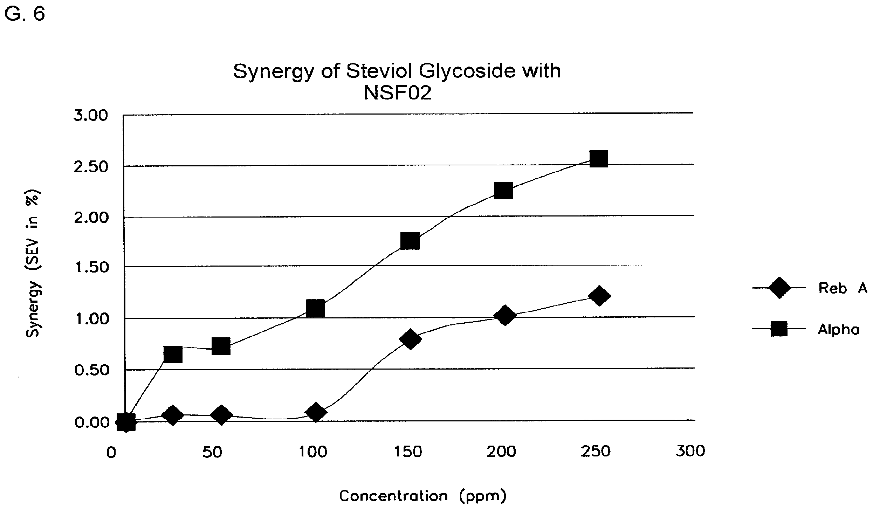

NSF02 is a stevia derived natural flavor that can modify flavor and enhance sweetness in different food matrix. When NSF02 was mixed with required quantity of Alpha or Reb A in acidic solution (pH=3.8) to attain 8% sugar equivalent sweetness, it was discovered that Alpha shows enhanced sweetness in presence of very small amount of NSF02 (25 ppm or less), whereas more than 100 ppm NSF02 had to be added to attain any synergy with Reb A as shown in Figure 6.

## Claims

1. A sweetener composition consisting of a mixture of Rebaudioside A and processed Rebaudioside B, wherein the level of processed Rebaudioside B in the steviol glycoside blend ranges from 10% to 26% by weight of the steviol glycoside blend, wherein the steviol glycoside blend is made by a process comprising the steps of:
a. combining a Rebaudioside B composition with water at a ratio of about 1:1 to form a mixture;
b. increasing the temperature of the mixture by a gradient heating method comprising heating the mixture at a rate of 1°C/min;
c. holding the mixture at an elevated temperature of 110°C-140°C for 0-120 min;
d. decreasing the temperature of the mixture to room temperature at a gradient of 1°C/min to obtain a Rebaudioside B composition solution;
e. spray drying the Rebaudioside B composition solution to obtain the processed Rebaudioside B composition; and
f. mixing the processed Rebaudioside B composition with Rebaudioside A.

## Patentansprüche

1. Süßstoff-Zusammensetzung, bestehend aus einer Mischung von Rebaudiosid A und behandeltem Rebaudiosid B, wobei der Gehalt von behandeltem Rebaudiosid B in der Steviolglycosidmischung im Bereich von 10 bis 26 Gewichts-% der Steviolglycosidmischung liegt, wobei die Steviolglycosidmischung hergestellt wird durch ein Verfahren, das folgende Schritte umfasst:
a. Kombinieren von einer Rebaudiosid B-Zusammensetzung mit Wasser in einem Verhältnis von etwa 1:1, um eine Mischung zu bilden;
b. Erhöhen der Temperatur der Mischung durch ein Wärmegradientenverfahren, das das Erwärmen der Mischung mit einer Rate von 1 °C/min umfasst;
c. Halten der Mischung bei einer erhöhten Temperatur von 110 °C - 140 °C für 0 - 120 min;
d. Verringern der Temperatur der Mischung auf Raumtemperatur mit einem Gradienten von 1 °C/min, um eine Lösung der Rebaudiosid B-Zusammensetzung zu erhalten;
e. Sprühtrocknen der Lösung der Rebaudiosid B-Zusammensetzung, um die behandelte Rebaudiosid B-Zusammensetzung zu erhalten; und
f. Mischen der behandelten Rebaudiosid B-Zusammensetzung mit Rebaudiosid A.

## Revendications

1. Une composition édulcorante consistant en un mélange de Rébaudioside A et de Rébaudioside B transformé, dans lequel le niveau de Rébaudioside B transformé dans le mélange de glycoside de stéviol varie de 10 % à 26 % en poids du mélange de glycoside de stéviol, dans lequel le mélange de glycoside de stéviol est préparé par un procédé comprenant les étapes de :
a. combinaison d'une composition de Rébaudioside B avec de l'eau selon un ratio d'environ 1:1 pour former un mélange ;
b. augmentation de la température du mélange par une méthode de chauffage par gradient comprenant le chauffage du mélange à une vitesse de 1°C/minute;
c. maintien du mélange à une température élevée de 110°C-140°C pendant 0-120 minutes ;
d. diminution de la température du mélange à température ambiante selon un gradient de 1°C/minute pour obtenir une solution d'une composition de Rébaudioside B ;
e. séchage par atomisation de la solution d'une composition de Rébaudioside B pour obtenir une composition de Rébaudioside B transformé ; et
f. mélange de la composition de Rébaudioside B transformé avec le Rébaudioside A.
